Europäisches Patentamt

European Patent Office

Office européen des brevets

(19)

(11) Publication number: **0 173 238 B1**

(12) # EUROPEAN PATENT SPECIFICATION

(45) Date of publication of patent specification: **17.07.91**   (51) Int. Cl.⁵: **B60J 5/00**

(21) Application number: **85110473.7**

(22) Date of filing: **20.08.85**

(54) **Construction of door frame in motor vehicle door.**

(30) Priority: **21.08.84 JP 126865/84 U**

(43) Date of publication of application:
**05.03.86 Bulletin 86/10**

(45) Publication of the grant of the patent:
**17.07.91 Bulletin 91/29**

(84) Designated Contracting States:
**DE FR GB**

(56) References cited:
**EP-A- 0 068 367**
**GB-A- 1 522 347**

**PATENT ABSTRACTS OF JAPAN, vol. 8, no. 57 (M-283)[1494], 15th March 1984; & JP - A - 58 209 617 (SHIRAKI KINZOKU KOGYO) 06-12-1983**

(73) Proprietor: **TOYOTA JIDOSHA KABUSHIKI KAISHA**
**1, Toyota-cho Toyota-shi**
**Aichi-ken 471(JP)**

Proprietor: **AISIN SEIKI KABUSHIKI KAISHA**
**1, Asahi-machi 2-Chome**
**Kariya City Aichi Pref.(JP)**

(72) Inventor: **Okamoto, Yuji TOYOTA JIDOSHA KABUSHIKI KAISHA**
**1, Toyota-cho**
**Toyota-shi Aichi-ken(JP)**
Inventor: **Nakamura, Shunichi AISIN SEIKI KABUSHIKI KAISHA**
**1, Asahi-Machi 2-chome**
**Kariya City Aichi pref.(JP)**

(74) Representative: **Grams, Klaus Dieter, Dipl.-Ing. et al**
**Patentanwaltsbüro Tiedtke-Bühling-Kinne-Grupe-Pellmann-Grams-Struif Winter-Roth**
**Bavariaring 4**
**W-8000 München 2(DE)**

EP 0 173 238 B1

## Description

This invention relates to construction of a door frame in a motor vehicle door, and more particularly to improvements in construction of a door frame, wherein a plate member is continuously bent to form two channels contiguous to each other.

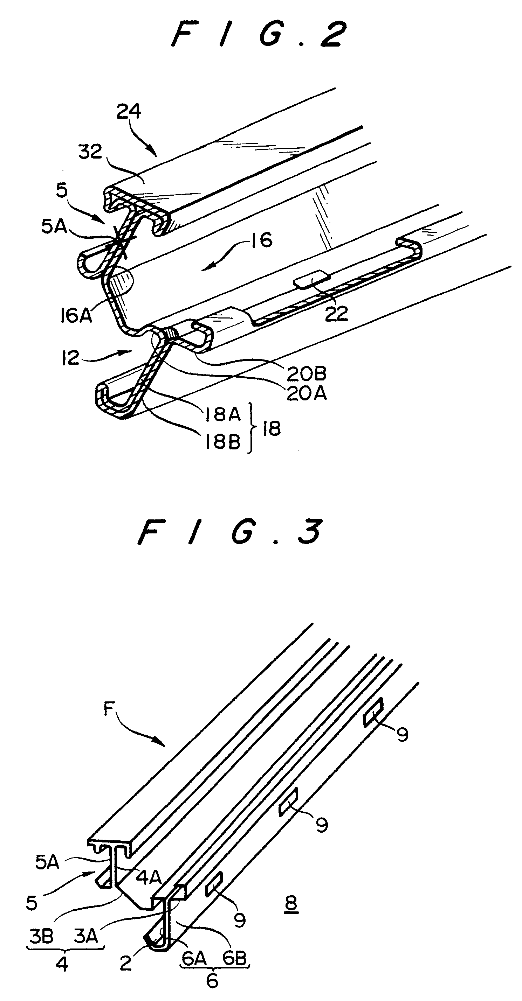

As shown in Fig. 3 for example, there has heretofore been known a door frame F comprising a first channel 2 for holding a door weather strip, not shown, and a second channel 4 adjacent to the first channel 2 on the outboard side, for holding a door glass run, not shown, wherein the first and the second channels 2 and 4 are formed by continuously bending a plate member, a foot portion 6 of the first channel 2 is of two-layer structure and the rear surface thereof is directed toward the passenger compartment 8 and the second channel 4 is formed by a pair of bent extensions 3A and 3B which are extending outwardly from each other from the outer end position of the foot portion 6 of structure.

In Fig. 3 designated at 5 is a third channel for holding a weather strip, not shown.

In the conventional construction of the door frame as shown in Fig. 3, plate sections 6A and 6B constituting the foot portion 6 are welded to each other by spot weldings at suitable intervals in the longitudinal direction thereof.

Furthermore, a foot portion 5A of the third channel 5 and a side wall 4A superposed on the foot portion 5A are also spot-welded together in a superposed state.

In this case, the weather strip is mounted to the third channel 5 and the glass run is mounted to the second channel 4, so that the spot-weld marks for welding the bottom portion 5A to the side wall 4A can be hid.

However, spot-weld marks 9 at the foot portion 6 of the first channel 2 are exposed to the compartment's side.

Because of this, there has been a disadvantage that the mark 9 portions should be repaired to trim the surfaces.

Furthermore, since the foot portion 6 is spot-welded at the center position in the widthwise direction thereof, the upper half portion of the bottom portion 6 in the drawing has a low resisting force against a force of separating the plate sections 6A and 6B from each other from the side of the second channel 4.

It is therefore the primary object of the present invention is to provide construction of a door frame in a motor vehicle door, wherein the welded portions are not exposed to the passenger compartment.

Furthermore, another object of the present invention is to provide construction of a door frame in a motor vehicle door, where in a force of separating from each other plate sections of two-layer structure constituting the bottom portion of the first channel can be strongly resisted.

To this end, the present invention contemplates that, in construction of a door frame in a motor vehicle door, comprising a first substantially C-shaped channel for holding a door weather strip and a second substantially L-shaped channel adjacent and directed outwardly with respect to said first channel, wherein a single continuous plate member is bent to form said first and second channels, a foot portion of the first channel being of a two-layer structure and the outside surface thereof being directed toward the passenger compartment and the second channel is formed by a pair of bent extrusions extending outwardly from each other at the outer corner of the foot portion of the two-layer structure of the first channel, the pair of bent extensions are connected to each other by arc-welding along the outer corner of the foot portion of the first channel, which are thereby integrally connected to each other.

To the above end, the present invention contemplates that one of plate sections constituting the bottom portion of the first channel is connected to one of the bent extensions and the other is connected to other of the bent extensions.

To the above end, the present invention contemplates that one of the bent extensions is connected to a side wall of the second channel, the side wall is connected to a molding portion which perpendicularly intersects the side wall and constituting a part of the outer surface of the vehicle body.

To the above end, the present invention contemplates that said molding portion is connected to the third channel.

To the above end, the present invention contemplates that said side wall of the second channel and a bottom portion of the third channel are connected to each other in the two-layer structure.

In this invention, the plate sections of two-layer structure constituting the foot portion of the first channel are arc-welded at the bent portions of the plate members from the side corresponding to the bottom portion of the second channel, whereby the weld marks are hid by a door glass run held by the second channel.

Fig. 1 is a sectional view showing the construction of the door frame in the motor vehicle embodying the present invention;

Fig. 2 is a partially sectional, perspective view showing an embodiment of the construction of the door frame in the motor vehicle door according to the present invention; and

Fig. 3 is a schematic, partially sectional, perspective view showing the conventional construction of the door frame in the motor vehicle door.

Description will hereunder be given of one embodiment of the present invention with reference to the drawings.

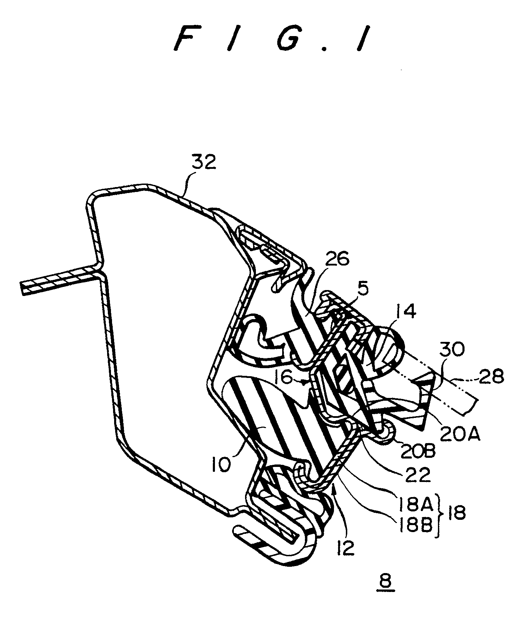

As shown in Figs. 1 and 2, according to this embodiment, in construction of a door frame 24 in a motor vehicle door, comprising a first channel 12 for holding a door weather strip 10 and a second channel 16 contiguous to the first channel 12 on the outboard side, for holding a door glass run 14, wherein the first and the second channels 12 and 16 are formed by continuously bending a plate member, a bottom portion 18 of the first channel 12 is of two-layer structure and the rear surface thereof is directed toward the passenger compartment 8 and the second channel 16 is formed by a pair of bent extensions 20A and 20B bent and extended in two directions separating from each other from the outer end position of the bottom portion 18 of two-layer structure of the first channel 12, the pair of bent extensions 20A and 20B are arc-welded at respective bending corner portions which are at the outer end position of the bottom portion 18 of the first channel 12, which are thereby integrally connected to each other.

In the drawing, designated at 22 is a welding bead formed by arc-welding.

As shown in Fig. 2, the arc-welded portions are arranged at suitable intervals in the longitudinal direction of the door frame 24.

In Fig. 1 is denoted:- a front pillar (32); a weather strip (26) held by a third channel 5; and a door glass (28) guided by a door glass run 14, which is brought into sealing contact with the door glass weather strip 30, integrally formed on this door glass run 14, when it is fully closed, One of plate sections 18A and 18B constituting the foot portion 18 of the first channel 12 is connected to the bent extension 20A and the other is connected to the bent extension 20B.

The aforesaid one 20A of the bent extensions is connected to a side wall 16A of the second channel 16, this side wall 16A is connected to a molding portion 32 which perpendicularly intersects the side wall 16A and constituting a part of the outer surface of the vehicle body, and further, this molding portion 32 is connected to the third channel 5.

Here, the side wall 16A of the second channel 16 and a bottom portion 5A of the third channel 5 are connected to each other in the two-layer structure similarly to the conventional door frame as shown in Fig. 3.

In this embodiment, the weld padding portion 22 by the arc-welding is disposed at the bottom portion of the second channel 16 and shielded by the door glass run 14 held in the second channel 16, so that there is no need of performing works of trimming the weld marks.

Furthermore, the welding bead 22 by the arc-welding is adapted to weld the bending corner portion where the plate sections 18A and 18B are connected to the bent extensions 20A and 20B at the outer end portion of the bottom portion 18 of the first channel, so that the resistant force against the force of separating the plate sections 18A and 18B from each other from the direction of the aforesaid outer end position can be increased.

Furthermore, in the case of the conventional door frame shown in Fig. 3, the bottom portion of the first channel is formed by a continuous process, and, in the case of the arc-welding in the above embodiment, the arc-welding is done by a continuous process similar to the above, so that production efficiency is not lowered.

Additionally, in the above embodiment the third channel 5 is integrally formed adjacent to one 16A of the side walls of the second channel 16, however, the present invention need not necessarily be limited to this, and is generally applicable to the case where the plate sections of two-layer structure constituting the bottom portion of the first channel are bent at the outer corner thereof into two directions opposite to each other, to thereby constitute the second channel.

In consequence, the present invention should be necessarily applicable also to the case where the third channel is not provided.

## Claims

1. Construction of a door frame (24) in a motor vehicle door, comprising a first substantially C-shaped channel (12) for holding a door weather strip (10) and a second substantially L-shaped channel (16) adjacent and directed outwardly with respect to said first channel (12), wherein a single continuous plate member is bent to form said first and second channels (12, 16), the foot portion (18) of said first channel (12) being of a two-layer plate structure and the outside surface thereof being directed toward the passenger compartment (8) and said second channel (16) being formed by a pair of bent extensions (20A, 20B) extending outwardly from each other at the outer corner of the foot portion (18) of the two-layer plate structure of said first channel (12), characterized in that said pair of bent extensions (20A, 20B) are connected to each other by arc-welding along the outer corner of the foot portion (18) of said first channel (12) thereby integrally connecting the end portion of the two layer plate structure (18A,18B) of said first channel (12).

2. Construction of a door frame as set forth in claim 1, wherein one of the plates (18A) forming the two plate layer structure of the foot portion (18) of the first channel (12) is connected to one (20A) of the bent extensions and the other plate (18B) is connected to the other (20B) of the bent extensions.

3. Construction of a door frame as set forth in claims 1 or 2, wherein one (20A) of the bent extensions is connected to a side wall (16A) of the second channel (16), the side wall (16A) being connected to a molding portion (30) which perpendicularly intersects the side wall (16A) and constitutes a part of the outer surface of the vehicle body.

4. Construction of a door frame as set forth in claim 3, wherein said molding portion (30) is connected to a third channel (5).

5. Construction of a door frame in a motor vehicle door as set forth in anyone of the preceeding claims, wherein said side wall (16A) of the second channel (16) and a bottom portion (5A) of the third channel (5) are connected to each other in a two-layer structure.

**Revendications**

1. Structure de cadre (24) de portière de véhicule automobile, comprenant un premier canal (12) sensiblement en forme de C, destiné à maintenir une bande d'étanchéité (10) de portière, et un second canal (16), sensiblement en forme de L, adjacent audit premier canal (12) et dirigé vers l'extérieur par rapport à celui-ci, dans laquelle un unique élément plat d'un seul tenant est replié afin de réaliser ledit premier canal et ledit second canal (12, 16), la partie formant la base (18) dudit premier canal (12) présentant une structure de plaque à deux couches et sa surface extérieure étant dirigée vers l'habitacle (8) et ledit second canal (16) étant formé par une paire de prolongements repliés (20A, 20B) qui s'écartent l'un de l'autre vers l'extérieur à l'angle extérieur de la partie (18) formant la base de la structure de plaque à deux couches dudit premier canal (12), dans laquelle en ce que lesdits deux prolongements repliés (20A, 20B) sont reliés l'un à l'autre par soudure à l'arc le long de l'angle extérieur de la partie (18) formant la base dudit premier canal (12), de manière à relier en un seul bloc, la partie d'extrémité de la structure (18A, 18B) de la plaque à deux couches dudit premier canal (12).

2. Structure de cadre de portière comme exposé dans la revendication 1, dans laquelle l'une (18A) des plaques ou tôles constituant la structure de couche à deux plaques ou tôles de la partie (18) formant la base du premier canal (12) est reliée à l'un (20A) des prolongements repliés et en ce que l'autre plaque ou tôle (18B) est reliée à l'autre (20B) des prolongements repliés.

3. Structure de cadre de portière comme exposé dans la revendication 1 ou dans la revendication 2, dans laquelle l'un (20A) des prolongements repliés est relié à une paroi latérale (16A) du second canal (16), la paroi latérale (16A) étant reliée à une partie de moulure (30) qui intersecte perpendiculairement la paroi latérale (16A) et qui constitue une partie de la surface extérieure de la carrosserie du véhicule.

4. Structure de cadre de portière comme exposé dans la revendication 3, dans laquelle ladite partie de moulure (30) est reliée à un troisième canal (5).

5. Structure de cadre de portière d'un véhicule automobile comme exposé dans l'une quelconque des revendications précédentes, dans laquelle la paroi latérale (16A) du second canal (16) et une partie (5A) de fond du troisième canal (5) sont reliées entre elles selon une structure à deux couches.

**Patentansprüche**

1. Konstruktion eines Türrahmens (24) in einer Kraftfahrzeugtür, die eine erste, im wesentlichen C-förmige Rinne (12) zum Halten eines Türdichtungsstreifens (10) und eine zweite, im wesentlichen L-förmige Rinne (16) angrenzend an die genannte erste Rinne (12) sowie mit Bezug zu dieser auswärts gerichtet umfaßt, wobei ein einzelnes kontinuierliches Plattenbauteil gebogen ist, um die genannte erste sowie zweite Rinne (12, 16) zu bilden, das Fußteil (18) der genannten ersten Rinne (12) von einem doppellagigen Plattenaufbau ist sowie deren Außenfläche zum Insassenraum (8) hin gerichtet ist und die genannte zweite Rinne (16) von einem Paar von abgebogenen Verlängerungen gebildet ist, die sich an der äußeren Ecke des Fußteils (18) des doppellagigen Plattenaufbaus der genannten ersten Rinne (12) voneinander auswärts erstrecken, dadurch gekennzeichnet, daß das Paar von abgebogenen Verlängerungen (20A, 20B) untereinander durch Lichtbogenschweißung längs der äußeren Ecke des Fußteils (18) der genannten ersten Rinne (12) verbunden ist, wodurch das Endstück des doppellagigen Plattenaufbaus (18A, 18B) der genannten ersten Rinne (12) einstückig verbunden wird.

2. Konstruktion eines Türrahmens nach Anspruch 1, wobei eine (18A) der den doppellagigen Plattenaufbau des Fußteils (18) der ersten Rinne (12) bildenden Platten mit einer (20A) der abgebogenen Verlängerungen verbunden ist und die andere Platte (18B) mit der anderen (20B) der abgebogenen Verlängerungen verbunden ist.

3. Konstruktion eines Türrahmens nach den Ansprüchen 1 oder 2, wobei eine (20A) der abgebogenen Verlängerungen mit einer Seitenwand (16A) der zweiten Rinne (16) verbunden ist und die Seitenwand (16A) mit einem Formteil (30), das die Seitenwand (16A) rechtwinklig kreuzt sowie einen Teil der Außenfläche der Fahrzeugkarosserie bildet, verbunden wird.

4. Konstruktion eines Türrahmens nach Anspruch 3, wobei das genannte Formteil (30) mit einer dritten Rinne (5) verbunden ist.

5. Konstruktion eines Türrahmens nach einem der vorhergehenden Ansprüche, wobei die genannte Seitenwand (16A) der zweiten Rinne (16) und ein Bodenteil (5A) der dritten Rinne (5) miteinander zu einer doppellagigen Konstruktion verbunden sind.

# F I G . 1

# F I G . 2

# F I G . 3